# FASCICULE DE BREVET EUROPEEN

(11) **EP 3 172 420 B1**
(45) Date de publication et mention de la délivrance du brevet: **02.01.2019**
(21) Numéro de dépôt: 15732621.6
(22) Date de dépôt: 24.06.2015
(51) Int. Cl.: F02B 37/02, F02B 37/16

(54) **DISPOSITIF DE CONTRÔLE DE LA QUANTITÉ D'AIR INTRODUIT À L'ADMISSION D'UN MOTEUR À COMBUSTION INTERNE SURALIMENTÉ ET PROCÉDÉ UTILISANT UN TEL DISPOSITIF**
VORRICHTUNG ZUR STEUERUNG DER MENGE AN LUFT, DIE EINEM TURBOAUFGELADENEN VERBRENNUNGSMOTOR ZUGEFÜHRT WIRD, UND VERFAHREN ZUR VERWENDUNG SOLCH EINER VORRICHTUNG
DEVICE FOR CONTROLLING THE QUANTITY OF AIR SUPPLIED TO A SUPERCHARGED INTERNAL COMBUSTION ENGINE AND METHOD USING SUCH A DEVICE

(30) Priorité: 24.07.2014 FR 1457141
(43) Date de publication de la demande: 31.05.2017
(73) Titulaire: IFP Energies nouvelles, 92500 Rueil-Malmaison (FR)
(72) Inventeur: COLLIOU, Thierry, F-38138 Les Cotes d'Arey (FR)
(74) Mandataire: IFP Energies nouvelles
(86) Numéro de dépôt international: PCT/EP2015/064282
(87) Numéro de publication internationale: WO 2016/012187

(56) Documents cités:
- DE-A1- 10 232 519
- DE-A1-102012 202 857
- FR-A1- 2 281 501
- FR-A1- 2 478 736
- GB-A- 2 041 084
- GB-A- 2 438 360
- JP-A- S57 200 618
- US-A- 3 877 230

## Description

La présente invention se rapporte à un dispositif de contrôle de la quantité d'air introduit à l'admission d'un moteur à combustion interne suralimenté, notamment d'un moteur stationnaire ou pour un véhicule automobile ou industriel, et à un procédé de contrôle de la quantité d'air pour un tel moteur.

Comme cela est largement connu, la puissance délivrée par un moteur à combustion interne est dépendante de la quantité d'air introduite dans la chambre de combustion de ce moteur, quantité d'air qui est elle-même proportionnelle à la densité de cet air.

Ainsi, il est habituel d'augmenter cette quantité d'air au moyen d'une compression de l'air extérieur avant qu'il ne soit admis dans cette chambre de combustion. Cette opération, appelée suralimentation, peut être réalisée par tous moyens, tel qu'un turbocompresseur ou un compresseur entraîné, qui peut être centrifuge ou volumétrique.

Dans le cas d'une suralimentation par un turbocompresseur, ce dernier comprend une turbine rotative, à simple flux ou à double flux, reliée par un axe à un compresseur rotatif. Les gaz d'échappement issus du moteur traversent la turbine qui est alors entrainée en rotation. Cette rotation est ensuite transmise au compresseur qui, de par sa rotation, comprime l'air extérieur avant qu'il ne soit introduit dans la chambre de combustion.

Comme cela est mieux décrit dans la demande de brevet français N° 2 478 736, il est prévu, pour pouvoir amplifier de manière significative cette quantité d'air comprimé dans la chambre de combustion du moteur, d'augmenter encore plus la compression de l'air extérieur par le compresseur.

Les documents GB 2 041 084 A et GB 2 438 360 A décrivent des dispositifs et procédés similaires.

Cela se réalise plus particulièrement en augmentant la vitesse de rotation de la turbine et donc du compresseur.

Pour cela, une partie de l'air comprimé sortant du compresseur est déviée pour être admis directement à l'entrée de la turbine en se mélangeant avec les gaz d'échappement. Cette turbine est alors traversée par une plus grande quantité de fluide (mélange d'air comprimé et de gaz d'échappement), ce qui permet d'augmenter la vitesse de rotation de la turbine et par conséquence du compresseur. Cette augmentation de vitesse du compresseur permet ainsi d'augmenter la pression de l'air extérieur qui sera comprimé dans ce compresseur puis introduit dans la chambre de combustion du moteur.

Par cela, l'air comprimé a une densité plus élevée ce qui permet d'accroitre la quantité d'air contenue dans la chambre de combustion.

Ce type de moteur suralimenté, bien que donnant satisfaction, présente néanmoins des inconvénients non négligeables.

En effet, le débit de l'air comprimé qui est admis à l'entrée de la turbine n'est pas correctement contrôlé, ce qui peut entrainer un dysfonctionnent du moteur.

Ainsi, à titre d'exemple, en cas de trop grande quantité d'air comprimé déviée à l'entrée de la turbine, les gaz d'échappement entrant dans la turbine sont refroidis de manière trop importante par cet air et amène une diminution du rendement global de la suralimentation.

La présente invention se propose de remédier aux inconvénients mentionnés ci-dessus grâce à un dispositif de contrôle de la quantité d'air introduit à l'admission d'un moteur à combustion interne suralimenté qui permet de répondre à toutes les demandes de puissance du moteur.

L'invention ici présentée permet également de réaliser un transfert de l'air comprimé de l'admission vers l'échappement même quand la pression moyenne de l'air comprimé à l'admission est inférieure à celle des gaz à l'échappement. Il suffit uniquement qu'il existe des phases durant le cycle de fonctionnement du moteur où la pression à l'admission est supérieure à celle existant à l'échappement.

A cet effet, la présente invention concerne un dispositif et un procédé de contrôle de la quantité d'air introduit à l'admission d'un moteur à combustion interne suralimenté tels que définis par les revendications 1 et 8.

Selon l'invention les branches portent en outre chacune un clapet antiretour.

L'une des branches peut être reliée à l'autre des branches par une conduite de liaison.

La conduite de liaison peut porter des moyens de vannage.

Les moyens de vannage peuvent comprendre des vannes proportionnelles.

Le conduit de transfert peut porter des moyens de chauffage de l'air comprimé qui y circule.

Les moyens de chauffage peuvent comprendre un échangeur de chaleur.

L'échangeur de chaleur peut comprendre une entrée de gaz d'échappement provenant de la turbine du turbocompresseur et une sortie de gaz d'échappement vers la ligne d'échappement.

Le procédé peut consister à séparer le conduit de transfert en deux branches et à contrôler la circulation de l'air comprimé dans chacune des branches par des moyens de vannage.

Le procédé peut consister à relier l'une des branches à l'autre de banches par un conduit de liaison.

Le procédé peut consister à chauffer l'air comprimé circulant dans le conduit de transfert avant de l'admettre dans la turbine.

Les autres caractéristiques et avantages de l'invention vont apparaître à la lecture de la description qui va suivre, donnée à titre uniquement illustratif et non limitatif, et à laquelle sont annexées :
- la figure 1 qui illustre un moteur à combustion interne avec son dispositif de suralimentation selon l'invention ;
- la figure 2 qui montre une variante du moteur à combustion interne avec son dispositif de suralimentation et
- la figure 3 qui illustre une variante du moteur à combustion interne avec son dispositif de suralimentation selon la figure 1.

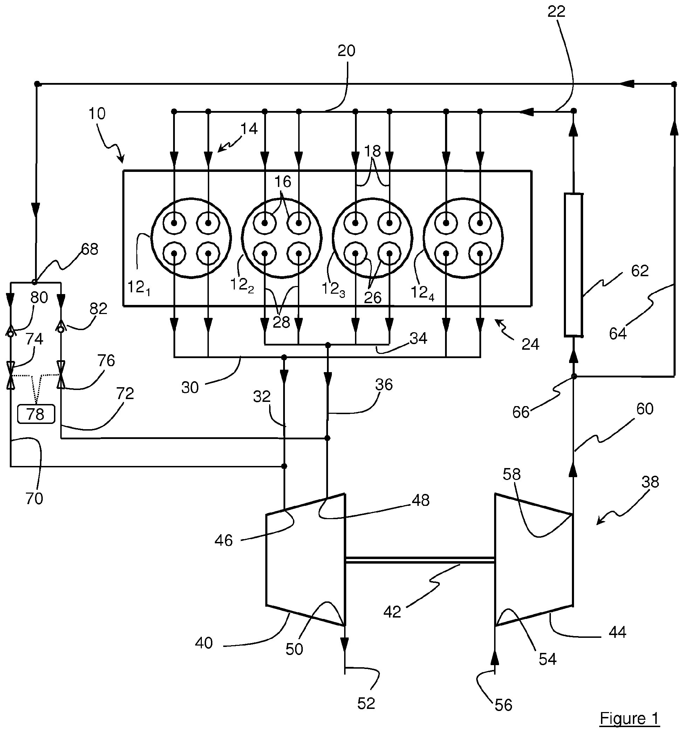

Sur la figure 1, le moteur à combustion interne 10 comprend au moins deux cylindres, ici quatre cylindres référencés 12₁ à 12₄ à partir de la gauche de la figure.

De manière préférentielle, ce moteur est un moteur à combustion interne à injection directe, notamment de type Diesel, mais cela n'écarte en aucune manière tout autre type de moteur à combustion interne.

Chaque cylindre comprend des moyens d'admission 14 avec au moins une soupape d'admission 16, ici deux soupapes d'admission contrôlant chacune une tubulure d'admission 18. Les tubulures d'admission 18 aboutissent à un collecteur d'admission 20 alimenté par un conduit d'alimentation 22 en air d'admission, tel que de l'air comprimé.

Ce cylindre comprend aussi des moyens d'échappement des gaz brûlés 24 avec au moins une soupape d'échappement 26, ici également deux soupapes contrôlant chacune une tubulure d'échappement 28.

Dans l'exemple illustré le moteur est prévu pour fonctionner selon un ordre de combustion dénommé 1-3-4-2. Compte tenu de cet ordre de combustion, les tubulures d'échappement du premier cylindre 12₁ et deuxième cylindre 12₄, qui forment un premier groupe d'au moins un cylindre, sont connectées à un premier collecteur d'échappement 30 avec une première sortie de gaz d'échappement 32. Les tubulures d'échappement du troisième et quatrième 12₂ et 12₃, qui forment un deuxième groupe d'au moins un cylindre, sont connectées à un deuxième collecteur d'échappement 34 qui comporte une deuxième sortie de gaz d'échappement 36.

Les deux sorties de gaz d'échappement aboutissent à un turbocompresseur 38 pour la compression de l'air et plus particulièrement à la turbine de détente 40 de ce turbocompresseur.

Comme illustré sur la figure 1, le turbocompresseur est un turbocompresseur à double entrée, plus connu sous le vocable de turbocompresseur "Twin Scroll".

Ce type de turbocompresseur comprend la turbine de détente 40 balayée par les gaz d'échappement et qui est reliée en rotation par un arbre 42 avec un compresseur 44.

Au niveau de la turbine, l'entrée des gaz d'échappement est divisée en deux sections, une première section d'entrée 46 raccordée à la première sortie de gaz d'échappement 32 du premier collecteur 30 et une deuxième section d'entrée 48 raccordée à la deuxième sortie de gaz d'échappement 36 du deuxième collecteur d'échappement 34.

L'évacuation de gaz 50 de la turbine 40 est raccordée conventionnellement à la ligne d'échappement 52 du moteur.

Le compresseur 44 du turbocompresseur 38 comporte une admission d'air extérieur 54 alimentée par une conduite d'alimentation 56. La sortie d'air comprimé 58 de ce compresseur est reliée au conduit d'alimentation 22 du collecteur d'admission 20 par une conduite 60.

Avantageusement, il peut être prévu de placer un radiateur de refroidissement de l'air comprimé 62 sur la conduite 60, entre le compresseur et la conduite 22.

Comme mieux visible sur la figure 1, un conduit de transfert 64 permet de faire circuler une partie de l'air comprimé sortant du compresseur 44 vers les entrées 46 et 48 de la turbine.

Plus précisément, ce conduit de transfert partiel prend naissance sur la conduite 60, à un point de d'intersection 66 entre le compresseur et le radiateur de refroidissement 62, et se sépare ensuite, à partir d'un point de bifurcation 68, en deux branches 70 et 72. La branche 70 aboutit à l'entrée 46 de la turbine par sa jonction avec la première sortie de gaz d'échappement 32 et la branche 72 aboutit à l'autre entrée 48 de cette turbine par sa jonction avec la sortie de gaz d'échappement 36.

Chaque branche porte des moyens de vannage 74 et 76, comme une vanne proportionnelle, commandés par un moyen de commande 78, qui peut être commun aux deux moyens de vannage. Cette vanne permet ainsi de contrôler la circulation de l'air comprimé qui circule dans la branche.

Avantageusement, chaque branche comporte également un clapet anti-retour 80 et 82 qui interdit la circulation de l'air comprimé de la branche vers le compresseur tout en empêchant la mise en communication des deux branches.

Cette configuration permet ainsi, pendant le fonctionnement du moteur, de profiter des zones de basse pression échappement régnant ponctuellement dans les collecteurs d'échappement pour introduire de l'air comprimé dans la turbine et augmenter ainsi le débit de cette turbine et par conséquent du compresseur. Cela permet également d'avoir une suralimentation plus efficace pour les bas régimes.

Durant le fonctionnement, en cas de besoin d'air en grande quantité dans les cylindres, les vannes 74 et 76 sont commandées en ouverture pour introduire de l'air comprimé provenant du compresseur 44 dans la turbine 40.

L'air comprimé sortant du compresseur 44 circule dans le conduit 64 puis dans les branches 70 et 72 pour aboutir aux entrées de gaz d'échappement 46 et 48 de la turbine 40 en y apportant un surplus de fluide à cette turbine.

Ainsi, la turbine est parcourue non seulement par les gaz d'échappement venant des sorties 32 et 36, mais également par de l'air comprimé qui vient s'ajouter à ces gaz. De ce fait, la rotation de la turbine est augmentée, ce qui entraine une augmentation de rotation du compresseur et, en conséquence, une augmentation de la pression de l'air comprimée qui sort de ce compresseur.

Bien entendu, les vannes 74 et 76 sont contrôlées par le moyen de commande 78 de façon à admettre la quantité d'air comprimé dans la turbine qui répond aux besoins de suralimentation du moteur.

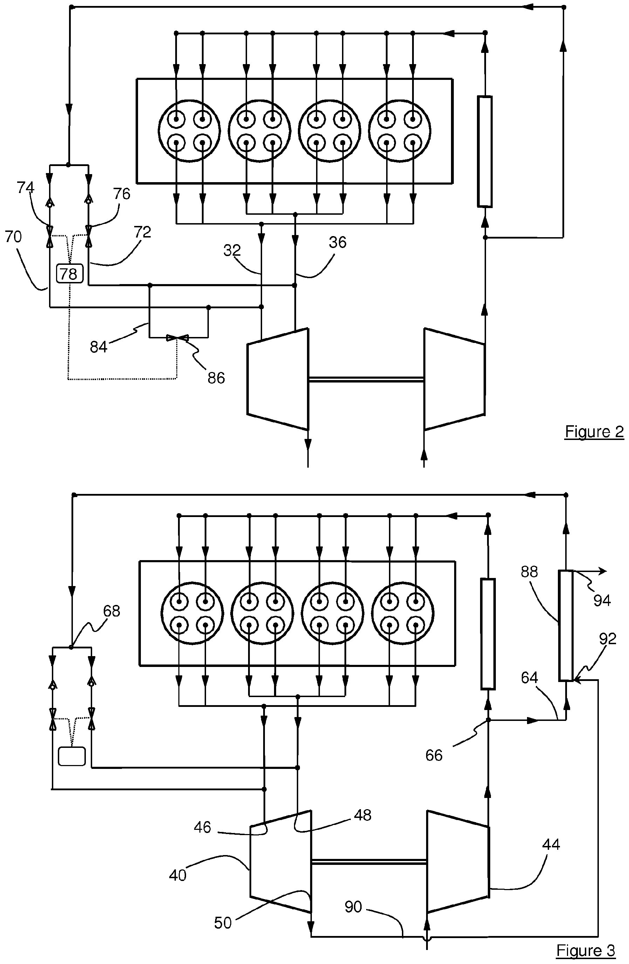

La variante de la figure 2 se distingue de la figure 1 par la mise en place d'une conduite de liaison 84 entre les deux branches 70 et 72. Cette conduite est munie de moyens de vannage 86, comme une vanne proportionnelle, qui, ici, est également commandée par le moyen de commande 78.

L'une des extrémités de cette conduite est reliée à la branche 70 en un point situé entre la vanne 74 et la sortie de gaz d'échappement 32 et l'autre des extrémités en un point situé entre la vanne 76 et la sortie de gaz d'échappement 36.

Cette conduite permet de contrôler la communication de fluide entre les deux branches arrivant à la turbine.

Plus précisément, cette conduite de liaison permet de dévier une partie de l'air comprimé circulant dans l'une des branches pour l'introduire dans l'autre des branches en se mélangeait avec les gaz d'échappement aux entrées de la turbine 40.

En outre, la conduite de liaison permet de ramener sur une branche de la turbine le différentiel de pression des gaz d'échappement (ou pulsatoire échappement) de l'autre branche qui est décalée angulairement dans le cycle de combustion du moteur.

Sur la figure 3, qui comporte pour l'essentiel les mêmes éléments que ceux de la figure 1, l'air comprimé sortant du compresseur 44 et circulant dans le conduit de transfert 64 est réchauffé avant d'être introduit dans la turbine 40.

Pour cela, le conduit de transfert 64 porte un moyen de chauffage 88 de l'air comprimé, ici un échangeur de chaleur sous la forme d'un radiateur de chauffage, placé entre le point d'intersection 66 et le point de bifurcation 68 que comprend ce conduit. Ce radiateur est traversé par l'air comprimé qui circule dans ce conduit tout en étant parcouru par les gaz d'échappement du moteur. Ces gaz d'échappement proviennent de l'évacuation 50 de la turbine et sont amenés par une conduite 90 à l'entrée 92 du radiateur. Les gaz d'échappement parcourent ce radiateur en transférant la chaleur qu'ils contiennent à l'air comprimé pour ensuite ressortir de ce radiateur par la sortie 94 pour être dirigé vers la ligne d'échappement du moteur.

Ainsi, une partie de l'énergie des gaz d'échappement est récupérée par l'air comprimé qui est introduit dans la turbine par l'un ou l'autre des entrées 46 et 48.

Cet air comprimé chauffé permet ainsi d'apporter un surcroit d'énergie à la turbine qui, en conséquence, tournera à une vitesse plus élevée. Cette vitesse de rotation élevée est ensuite transmise au compresseur qui réalisera une compression plus élevée de l'air extérieur.

## Revendications

1. Dispositif de contrôle de la quantité d'air introduit à l'admission d'un moteur à combustion interne suralimenté, ledit moteur comprenant deux sorties de gaz d'échappement (32, 36) reliées chacune à un collecteur d'échappement (30, 34) respectif d'un groupe d'au moins un cylindre (12₁, 12₂, 12₃, 12₄), ledit dispositif comprenant un dispositif de suralimentation (38) comportant un turbocompresseur avec une turbine (40) à double entrée (50, 52) connectée auxdites sorties de gaz d'échappement ainsi qu'un compresseur (44) d'air extérieur, et un conduit de transfert partiel (64) de l'air comprimé du compresseur vers les entrées de la turbine, et le conduit de transfert partiel comprend deux branches (70, 72) reliées aux entrées de la turbine **caractérisé en ce que** les branches (70, 72) portent chacune des moyens de vannage (74, 76) contrôlant la circulation de l'air comprimé dans ces branches pour admettre la quantité d'air comprimé dans la turbine et **en ce que** les branches portent en outre chacune un clapet antiretour (80, 82).

2. Dispositif selon la revendication 1, caractérisé en que l'une (70) des branches est reliée à l'autre (72) des branches par une conduite de liaison (84).

3. Dispositif selon l'une des revendications 1 ou 2, caractérisé en que la conduite de liaison portent des moyens de vannage (86).

4. Dispositif selon l'une des revendications précédentes, caractérisé en que les moyens de vannage comprennent des vannes proportionnelles (74, 76; 86).

5. Dispositif selon la revendication 1, caractérisé en que le conduit de transfert (64) portent des moyens de chauffage (88) de l'air comprimé qui y circule.

6. Dispositif selon la revendication 5, **caractérisé en ce que** les moyens de chauffage (88) comprennent un échangeur de chaleur.

7. Dispositif selon la revendication 6, **caractérisé en ce que** l'échangeur de chaleur (88) comprend une entrée (92) de gaz d'échappement provenant de la turbine (40) du turbocompresseur et une sortie (94) de gaz d'échappement vers la ligne d'échappement.

8. Procédé de contrôle de la quantité d'air comprimé à l'admission d'un moteur à combustion interne suralimenté, ledit moteur comprenant deux sorties de gaz d'échappement (32, 36) reliées chacune à un collecteur d'échappement (30, 34) respectif d'un groupe d'au moins un cylindre (12₁, 12₂, 12₃, 12₄), ledit moteur comprenant un dispositif de suralimentation (38) avec un turbocompresseur avec une turbine (40) à double entrée (50, 52) connectée auxdites sorties de gaz d'échappement ainsi qu'un compresseur (44) d'air extérieur, et un conduit de transfert partiel (64) de l'air comprimé du compresseur vers les entrées de la turbine, le procédé consistant à introduire une partie de l'air comprimé sortant du compresseur dans les sections d'entrées (46, 48) de gaz d'échappement de la turbine (40), et le conduit de transfert partiel (64) comprenant deux branches (70, 72), le procédé étant **caractérisé en ce que** les deux branches portent chacune des moyens de vannage (74,76) contrôlant la circulation de l'air comprimé dans ces branches pour admettre la quantité d'air comprimé dans la turbine, les deux branches comprenant chacune un clapet anti-retour.

9. Procédé selon la revendication 8, **caractérisé en ce qu'**il consiste à relier l'une des branches à l'autre des banches par un conduit de liaison (84).

10. Procédé selon la revendication 8, **caractérisé en ce qu'**il consiste à chauffer l'air comprimé circulant dans le conduit de transfert avant de l'admettre dans la turbine.

## Patentansprüche

1. Vorrichtung zur Steuerung der Menge an Luft, die in das Ansaugrohr eines aufgeladenen Verbrennungsmotors eingebracht wird, wobei der Motor zwei Abgasauslässe (32, 36) umfasst, die jeweils mit einem jeweiligen Abgaskrümmer (30, 34) einer Gruppe mindestens eines Zylinders (12₁, 12₂, 12₃, 12₄) verbunden sind, wobei die Vorrichtung eine Aufladungsvorrichtung (38) umfasst, umfassend einen Turbokompressor mit einer Turbine (40) mit doppelten Lufteinlauf (50, 52), die mit den Abgasauslässen verbunden ist, sowie einen Außenluftkompressor (44), und eine partielle Transferleitung (64) der komprimierten Luft des Kompressors zu den Einlässen der Turbine, und wobei die partielle Transferleitung zwei Abzweiger (70, 72) umfasst, die mit den Einlässen der Turbine verbunden sind, **dadurch gekennzeichnet, dass** die Abzweiger (70 72) jeweils Ventilmittel (74, 76) tragen, welche die Zirkulation der komprimierten Luft in diesen Abzweigern steuern, um die Menge an komprimierter Luft in die Turbine einzulassen, und dadurch, dass die Abzweiger außerdem jeweils ein Rückschlagventil (80, 82) tragen.

2. Vorrichtung nach Anspruch 7, **dadurch gekennzeichnet, dass** einer (70) der Abzweiger mit dem anderen (72) der Abzweiger durch eine Verbindungsleitung (84) verbunden ist.

3. Vorrichtung nach einem der Ansprüche 1 oder 2, **dadurch gekennzeichnet, dass** die Verbindungsleitung Ventilmittel (86) trägt.

4. Vorrichtung nach einem der vorhergehenden Ansprüche, **dadurch gekennzeichnet, dass** die Ventilmittel Proportionalventile (74, 76; 86) umfassen.

5. Vorrichtung nach Anspruch 1, **dadurch gekennzeichnet, dass** die Transferleitung (64) Heizmittel (88) für die komprimierte Luft trägt, die darin zirkuliert.

6. Vorrichtung nach Anspruch 5, **dadurch gekennzeichnet, dass** die Heizmittel (88) einen Wärmetauscher umfassen.

7. Vorrichtung nach Anspruch 6, **dadurch gekennzeichnet, dass** der Wärmetauscher (88) einen Einlass (92) für Abgas, das von der Turbine (40) des Turbokompressors stammt, und einen Auslass (94) für das Abgas zur Abgasleitung umfasst.

8. Verfahren zur Steuerung der Menge an Luft, die in das Ansaugrohr eines aufgeladenen Verbrennungsmotors eingebracht wird, wobei der Motor zwei Abgasauslässe (32, 36) umfasst, die jeweils mit einem jeweiligen Abgaskrümmer (30, 34) einer Gruppe mindestens eines Zylinders (12₁, 12₂, 12₃, 12₄) verbunden sind, wobei der Motor eine Aufladungsvorrichtung (38) mit einem Turbokompressor mit einer Turbine (40) mit doppelten Lufteinlauf (50, 52) umfasst, die mit den Abgasauslässen verbunden ist, sowie einen Außenluftkompressor (44), und eine partielle Transferleitung (64) der komprimierten Luft des Kompressors zu den Einlässen der Turbine, wobei das Verfahren darin besteht, einen Teil der aus dem Kompressor austretenden Luft in die Abgaseinlasssektionen (46, 48) der Turbine (40) einzubringen, und wobei die partielle Transferleitung (64) zwei Abzweiger (70, 72) umfasst, wobei das Verfahren **dadurch gekennzeichnet ist, dass** die beiden Abzweiger jeweils Ventilmittel (74, 76) tragen, welche die Zirkulation der komprimierten Luft in diesen Abzweigern steuern, um die Menge an komprimierter Luft in die Turbine einzulassen, wobei die beiden Abzweiger außerdem jeweils ein Rückschlagventil (80, 82) umfassen.

9. Verfahren nach Anspruch 8, **dadurch gekennzeichnet, dass** dieses darin besteht, einen der Abzweiger mit dem anderen der Abzweiger durch eine Verbindungsleitung (84) zu verbinden.

10. Verfahren nach Anspruch 8, **dadurch gekennzeichnet, dass** dieses darin besteht, die komprimierte Luft, die in der Transferleitung zirkuliert, vor ihrem Ansaugen in die Turbine zu erhitzen.

## Claims

1. A device for controlling the amount of air fed to the intake of a turbocharged internal-combustion engine, said engine comprising two exhaust gas outlets (32, 36) connected each to a respective exhaust manifold (30, 34) of a group of at least one cylinder (12₁, 12₂, 12₃, 12₄), said device comprising a turbocharging device (38) including a turbocharger with a double-entry (50, 52) turbine (40) connected to said exhaust gas outlets, as well as an outside air compressor (44), and a line (64) for partial transfer of the compressed air from the compressor to the turbine entries, the partial transfer line comprising two branches (70, 72) connected to the turbine entries, **characterized in that** branches (70, 72) carry each throttling means (74, 76) controlling the compressed air circulation through these branches so as to allow the amount of compressed air into the turbine and **in that** the branches further carry each a non-return valve (80, 82).

2. A device as claimed in claim 1, **characterized in that** one (70) of the branches is connected to the other (72) branch by a connecting line (84).

3. A device as claimed in any one of claims 1 or 2, **characterized in that** the connecting line carries throttling means (86).

4. A device as claimed in any one of the previous claims, **characterized in that** the throttling means comprise proportional valves (74, 76; 86).

5. A device as claimed in claim 1, **characterized in that** transfer line (64) carries means (88) for heating the compressed air circulating therethrough.

6. A device as claimed in claim 5, **characterized in that** heating means (88) include a heat exchanger.

7. A device as claimed in claim 6, **characterized in that** heat exchanger (88) comprises an inlet (92) for exhaust gas coming from turbine (40) of the turbocharger and an outlet (94) for sending the exhaust gas to the exhaust line.

8. A method of controlling the amount of compressed air fed to the intake of a turbocharged internal-combustion engine, said engine comprising two exhaust gas outlets (32, 36) connected each to a respective exhaust manifold (30, 34) of a group of at least one cylinder (12₁, 12₂, 12₃, 12₄), said engine comprising a turbocharging device (38) including a turbocharger with a double-entry (50, 52) turbine (40) connected to said exhaust gas outlets, as well as an outside air compressor (44), and a line (64) for partial transfer of the compressed air from the compressor to the turbine entries, the method consisting in feeding part of the compressed air leaving the compressor into exhaust gas inlet sections (46, 48) of turbine (40), and partial transfer line (64) comprising two branches (70, 72), the method being **characterized in that** the two branches carry each throttling means (74, 76) controlling the compressed air circulation through these branches so as to allow the amount of compressed air into the turbine, the two branches comprising each a non-return valve.

9. A method as claimed in claim 8, **characterized in that** it consists in connecting one of the branches to the other branch through a connecting line (84).

10. A method as claimed in claim 8, **characterized in that** it consists in heating the compressed air circulating through the transfer line prior to allowing it into the turbine.
